# EUROPÄISCHE PATENTSCHRIFT

(11) **EP 4 291 470 B1**
(45) Veröffentlichungstag und Bekanntmachung des Hinweises auf die Patenterteilung: **09.04.2025**
(21) Anmeldenummer: 22703377.6
(22) Anmeldetag: 02.02.2022
(51) Int. Cl.: B62D 65/02

(54) **SYSTEM ZUR ANBRINGUNG VON DÄMMELEMENTEN AN STRUKTURELEMENTEN**
SYSTEM FOR MOUNTING INSULATING ELEMENTS ON STRUCTURAL ELEMENTS
SYSTÈME DE FIXATION D'ÉLÉMENTS ISOLANTS AUX ÉLÉMENTS DE STRUCTURE

(30) Priorität: 11.02.2021 EP 21156672
(43) Veröffentlichungstag der Anmeldung: 20.12.2023
(73) Patentinhaber: Sika Technology AG, 6340 Baar (CH)
(72) Erfinder: LINDGREN, Henrik, 7181 Feluy (BE); SANDER, Wolf-Peter, 61130 Nidderau (DE)
(74) Vertreter: Sika Patent Attorneys
(86) Internationale Anmeldenummer: PCT/EP2022/052497
(87) Internationale Veröffentlichungsnummer: WO 2022/171505

(56) Entgegenhaltungen:
- EP-A1- 3 756 983
- DE-A1- 102015 005 643
- DE-A1- 102018 210 148

## Beschreibung

Die Erfindung betrifft ein System zur Anbringung von Dämmelementen an Strukturelementen in einem Kraftfahrzeug. Weiterhin betrifft die Erfindung ein Verfahren zur Anbringung solcher Dämmelemente an Strukturelemente.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken. Baffle und Reinforcer sind der Fachperson beispielsweise aus EP 3756983, DE 10 2015 005643 oder DE 10 2018 210148 bekannt.

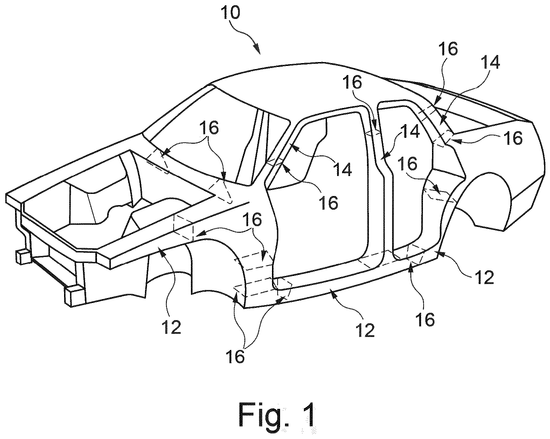

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Dämmelementen 16 abgedichtet bzw. verstärkt.

Üblicherweise werden solche Dämmelemente 16 von Hand an den Strukturelementen 12, 14 angebracht. Nachteilig an diesem bekannten manuellen Verfahren ist es jedoch, dass dadurch ein hoher Arbeitsaufwand benötigt wird, und dass zudem die Gefahr besteht, dass Dämmelemente an nicht vorgesehenen Positionen angebracht werden, und auch dass falsche Dämmelemente an einer Position eines Strukturelementes angebracht werden.

Es ist daher eine Aufgabe der vorliegenden Erfindung, ein verbessertes System zur Anbringung von Dämmelementen an Strukturelementen in einem Kraftfahrzeug zur Verfügung zu stellen, welches die Nachteile des Standes der Technik vermeidet. Das System soll insbesondere eine verbesserte Wirtschaftlichkeit aufweisen sowie die Gefahr von Fehlinstallationen möglichst verhindern.

Diese Aufgabe wird zunächst gelöst durch ein System zur Anbringung von Dämmelementen an Strukturelementen von Kraftfahrzeugen, das System umfassend: mehrere bereitgestellte Dämmelemente, ein Überführungselement, eine Zwischenstation, einen Roboter, und zumindest ein Strukturelement; wobei das Überführungselement dazu ausgebildet ist, die bereitgestellten Dämmelemente in der Zwischenstation anzuordnen; wobei die Dämmelemente in der Zwischenstation zur Entnahme durch den Roboter in einer vordefinierten räumlichen Lage und Position angeordnet sind; und wobei der Roboter dazu ausgebildet ist, jeweils einzelne Dämmelemente von der Zwischenstation zu entnehmen und an Strukturelementen anzuordnen.

Das hier vorgeschlagene System bietet den Vorteil, dass durch die automatisierte Anbringung der Dämmelemente an Strukturelementen ein Arbeitsaufwand massgeblich verkleinert wird. Durch das hier vorgeschlagene Anordnen von Dämmelementen in einer Zwischenstation kann insbesondere das System bzw. der Vorgang geladen und vorbereitet werden, so dass es für längere Zeit autonom arbeiten kann. Da in der Regel pro Kraftfahrzeug viele solcher Dämmelemente verbaut werden, bedeutet dies eine grosse Einsparung an menschlichem Arbeitseinsatz.

Zudem hat die Automatisierung der Anbringung von Dämmelementen an Strukturelementen den Vorteil, dass dadurch die Gefahr von Fehlmanipulationen verringert werden kann. Es kommt beispielsweise manchmal vor, dass ähnlich geformte Dämmelemente an verschiedenen Orten einer Karosserie angebracht werden. Insbesondere gibt es auch Situationen, wo auf einer linken und einer rechten Seite der Karosserie ein gespiegeltes Dämmelement zum Einsatz kommt. In solchen und ähnlichen Situationen besteht bei manueller Anbringung der Dämmelemente jeweils die Gefahr, dass ein falsches Dämmelement an einem bestimmten Ort eingesetzt wird oder dass es zu einer Verwechslung von linksseitigem und rechtsseitigem Dämmelement kommt. Durch die Automatisierung dieses Prozesses können solche Fehlmanipulationen weitgehendst ausgeschlossen werden.

Das hier vorgeschlagene System bietet weiterhin insbesondere den Vorteil, dass eine Automation durch das vordefinierte Anordnen der Dämmelemente in der Zwischenstation wesentlich effizienter und kostengünstiger ausgestaltet werden kann. Durch die bzgl. einer räumlichen Lage und Position vordefinierte Anordnung der Dämmelemente in der Zwischenstation kann der Greifvorgang der Dämmelemente durch den Roboter vereinfacht und effizienter gemacht werden.

Die Bezeichnung "Dämmelement" umfasst im Zusammenhang mit dieser Erfindung Elemente zur Abschottung und/oder Abdämmung und/oder Verschliessung und/oder Verstärkung und/oder Dämmung eines Strukturelementes. Diese verschiedenen Eigenschaften eines solchen Dämmelementes können dabei einzeln oder aber in Kombination miteinander auftreten.

Die Bezeichnung "Oberseite" und "Unterseite" bedeutet im Zusammenhang mit dieser Erfindung jeweils die beiden Hauptoberflächen bzw. die beiden grössten Seitenflächen des Dämmelementes. Da die Dämmelemente dazu ausgelegt sind, einen Querschnitt in einem Strukturelement zu verschliessen, bedeutet dies, dass die Oberseite und die Unterseite sich jeweils im Wesentlichen in einer Ebene eines abzudämmenden Querschnitts befinden in einem Anwendungszustand. Dabei können die Oberseite bzw. die Unterseite auch einen stufenförmigen Charakter haben, das heisst, die Oberseite bzw. die Unterseite muss nicht vollständig flach ausgebildet sein.

Die Bezeichnung "parallel" in Bezug zur Anordnung von Dämmelementen in einem Stapel mehrerer identischer Dämmelemente bedeutet im Zusammenhang dieser Erfindung, dass jeweils dieselben Flächen und/oder Kanten der identischen Dämmelemente im Wesentlichen parallel zueinander angeordnet sind.

In einer beispielhaften Ausführungsform umfassen die Dämmelemente jeweils: einen Träger; und ein expandierbares Material, welches auf dem Träger angeordnet ist; wobei das Dämmelement eine Oberseite und eine Unterseite hat, welche in einem Verwendungszustand im Wesentlichen in einer Ebene eines abzudämmenden Querschnittes des Strukturelementes ausgerichtet sind.

In einer beispielhaften Ausführungsform sind die mehreren bereitgestellten Dämmelemente aufeinander gestapelt angeordnet.

Dies hat zunächst den Vorteil, dass dadurch die Dämmelemente in gestapelter Form zur Verfügung gestellt werden. Dadurch können solche Dämmelemente für den Transport aufeinandergestapelt werden und im gestapelten Zustand verpackt und transportiert werden. Dies bringt einerseits Ersparnisse bei den Transportkosten, weil dadurch die Dämmelemente platzsparender verpackt werden können, so dass in einem bestimmten Volumen mehr Dämmelemente transportiert werden können, als dies mit herkömmlichen Dämmelementen der Fall war. Zudem bietet eine Stapelung solcher Dämmelemente den Vorteil, dass Verwechslungen von unterschiedlichen Dämmelementen einfacher erkannt werden können. Wenn beispielsweise ein erstes Dämmelement in einem Behälter mit mehreren zweiten Dämmelementen verpackt wird, fällt dies sofort auf, weil das erste Dämmelement in aller Regel nicht mit den zweiten Dämmelementen stapelbar ist. Dadurch können Verwechslungen stark reduziert werden.

Die Bereitstellung der Dämmelemente in gestapelter Form bietet weiterhin den Vorteil, dass durch die gestapelte Anordnung für Transport und Lagerung die einzelnen Dämmelemente weniger leicht beschädigt werden können. Werden nämlich wie bisher die einzelnen Dämmelemente lose in einem Behälter transportiert, so kommt es zu vielen Kontakten zwischen den Dämmelementen, wobei ab und zu eine Beschädigung auftreten kann. Werden jedoch die Dämmelemente in Stapeln transportiert, so wird eine Anzahl an mechanischen Berührungen der Dämmelemente untereinander stark reduziert. Zudem können die Dämmelemente derart ausgestaltet werden, dass die vorgesehenen Berührungsorte robust bzw. wenig anfällig auf Beschädigung ausgebildet sind, und/oder dass leichter zu beschädigende Orte der Dämmelemente an geschützten Stellen angeordnet sind, welche beispielsweise bei einer Stapelung durch die benachbarten Dämmelemente abgedeckt sind.

In einer beispielhaften Ausführungsform sind die mehreren bereitgestellten Dämmelemente in einem Behälter angeordnet.

In einer beispielhaften Ausführungsform weist das Dämmelement auf der Oberseite und auf der Unterseite jeweils zumindest eine oder zumindest zwei oder zumindest drei Kontaktstellen auf, wobei diese Kontaktstellen derart ausgebildet sind, dass bei einer Stapelung mehrerer identischer Dämmelemente jeweils benachbarte Dämmelemente über diese Kontaktstellen aufeinander aufliegen und dadurch parallel zueinander angeordnet sind.

In einer beispielhaften Ausführungsform hat das Dämmelement auf der Oberseite und auf der Unterseite jeweils genau drei Kontaktstellen, welche bei einer Stapelung von benachbarten Dämmelementen aufeinander aufliegen.

In einer alternativen Weiterbildung hat das Dämmelement auf der Oberseite und auf der Unterseite genau vier oder zumindest vier solche Kontaktstellen.

In einer weiteren alternativen Ausführungsform hat das Dämmelement auf der Oberseite und auf der Unterseite genau fünf oder zumindest fünf solche Kontaktstellen.

In einer beispielhaften Ausführungsform sind zumindest eine Kontaktstelle auf der Oberseite und eine dieser zugeordneten Kontaktstelle auf der Unterseite derart ausgebildet, dass benachbarte Dämmelemente bei einer Stapelung in vertikaler Richtung gegen eine horizontale Verschiebung gesichert sind.

In einer beispielhaften Weiterbildung sind zumindest eine Kontaktstelle auf der Oberseite und eine dieser zugeordneten Kontaktstelle auf der Unterseite derart ausgebildet, dass bei einer Stapelung eine mechanische Arretierung zwischen den entsprechenden Kontaktstellen entsteht.

In einer beispielhaften Ausführungsform ist eine Kontaktstelle auf der Oberseite als erstes Kupplungselement ausgebildet und eine dieser zugeordneten Kontaktstelle auf der Unterseite ist als zweites Kupplungselement ausgebildet, wobei bei einer Stapelung das erste Kupplungselement und das zweite Kupplungselement derart ineinandergreifen, dass dadurch eine temporäre Fixierung der benachbarten Dämmelemente entsteht.

In einer beispielhaften Ausführungsform liegt zumindest eine Kontaktstelle in einem Bereich eines Fixierungselementes.

Als "Bereich eines Fixierungselementes" wird im Zusammenhang dieser Erfindung das Fixierungselement selbst, eine Basis des Fixierungselementes, und das expandierbare Material an der Basis des Fixierungselementes verstanden, welches benötigt wird, um die Öffnung im Strukturelement, in welcher das Fixierungselement eingeführt wird, abzudämmen.

In einer beispielhaften Ausführungsform ist das Fixierungselement als Clip ausgebildet.

In einer alternativen Ausführungsform ist das Fixierungselement als Lasche, Schweisslasche, Klammer, Hacken, oder Niete ausgebildet.

In einer beispielhaften Ausführungsform ist das Fixierungselement aus Kunststoff, insbesondere Polyamid, oder aus Metall ausgebildet.

In einer beispielhaften Ausführungsform beträgt eine Höhe des Fixierungselementes in einer Stapelrichtung weniger als 8 mm, bevorzugt weniger als 7 mm, besonders bevorzugt weniger als 6 mm.

In einer beispielhaften Ausführungsform beträgt eine Höhe an der Basis des Fixierungselementes in Stapelrichtung, welche sowohl eine Basis des Fixierungselementes umfasst als auch das expandierbare Material an der Basis des Fixierungselementes, welches benötigt wird, um die Öffnung im Strukturelement, in welcher das Fixierungselement eingeführt wird, abzudämmen, höchstens 130% oder höchstens 120% oder höchstens 110% einer Höhe des Fixierungselementes in Stapelrichtung.

Die Ausgestaltung solcher relativen Höhen hat den Vorteil, dass dadurch die Dämmelemente platzsparender verpackt werden können.

In einer beispielhaften Ausführungsform ist zumindest eine Kontaktstelle als Distanzelement ausgebildet, wobei das Distanzelement in einem Verwendungszustand des Dämmelementes im Strukturelement zur Abstützung und/oder Positionierung des Dämmelementes am Strukturelement dient.

In einer beispielhaften Weiterbildung ist das Distanzelement an sich stapelbar ausgestaltet, wobei zwei ineinander gestapelte Distanzelemente eine Gesamthöhe in Stapelrichtung von höchstens 170% oder höchstens 160% oder höchstens 150% oder höchstens 140% oder höchstens 130% einer Höhe eines einzelnen Distanzelementes aufweisen.

In einer beispielhaften Ausführungsform bilden Stufen des Trägers einen Winkel zur Stapelrichtung von zumindest 35° oder zumindest 40° oder zumindest 45° oder zumindest 50° oder zumindest 55°.

Der Vorteil von derart gestalteten Stufen liegt darin, dass Dämmelemente mit flacheren Stufen besser gestapelt werden können, als dies mit steileren Stufen der Fall wäre. Bei steileren Stufen besteht insbesondere das Problem, dass benachbarte Dämmelemente nicht ohne horizontalen Versatz vertikal übereinander angeordnet werden können.

In einer beispielhaften Ausführungsform ist zumindest eine Kontaktstelle als Auflageelement ausgebildet, welches aus einer allgemeinen Oberfläche der Oberseite oder der Unterseite des Dämmelementes in Stapelrichtung herausragt.

In einer beispielhaften Ausführungsform sind alle oder einzelne Kontaktstellen durch den Träger ausgebildet.

In einer alternativen Ausführungsform sind alle oder einzelne Kontaktstellen durch das expandierbare Material ausgebildet.

In einer weiteren Ausführungsform ist zumindest eine Kontaktstelle durch den Träger gebildet, und zumindest eine Kontaktstelle ist durch das expandierbare Material gebildet.

Da der Träger in der Regel mit kleineren Toleranzen hergestellt werden kann als das expandierbare Material, kann es vorteilhaft sein, die Kontaktstellen möglichst durch den Träger auszubilden.

In einer beispielhaften Ausführungsform hat das Dämmelement zumindest ein Sicherungselement, welches derart ausgebildet ist, dass bei aufeinander gestapelten Dämmelementen ein Dämmelement durch das Sicherungselement eines benachbarten Dämmelementes gegen eine Verschiebung quer zur Stapelrichtung und/oder gegen eine Rotation des Dämmelementes um die Stapelrichtung gesichert ist.

In einer beispielhaften Ausführungsform ist das Sicherungselement derart ausgebildet, dass sich bei aufeinander gestapelten Dämmelementen die Sicherheitselemente zweier benachbarter Dämmelemente in Stapelrichtung überlappen.

In einer beispielhaften Weiterbildung überlappen sich die Sicherheitselemente in Stapelrichtung um zumindest 3 mm oder um zumindest 5 mm oder um zumindest 7 mm.

In einer beispielhaften Ausführungsform hat das Sicherheitselement zumindest eine Führungsfläche, welche derart ausgebildet ist, dass bei einer Stapelung die Führungsfläche ein zu stapelndes Dämmelement führt, sodass das neu gestapelte Dämmelement im Wesentlichen deckungsgleich in Stapelrichtung auf dem Dämmelement angeordnet wird.

In einer beispielhaften Ausführungsform ist zumindest ein Distanzelement als Sicherungselement ausgestaltet.

In einer beispielhaften Weiterbildung ist das Distanzelement im Wesentlichen Y-förmig ausgestaltet. Beispielsweise können dabei einzelne Flächen der Schenkel des Y-förmigen Distanzelementes als Führungsfläche ausgebildet sein.

In einer alternativen Weiterbildung ist das Distanzelement im Wesentlichen U-förmig oder V-förmig. Wiederum können dabei einzelne Flächen der Schenkel des U-förmigen oder V-förmigen Distanzelementes als Führungsfläche ausgebildet sein.

In einer beispielhaften Ausführungsform ist zumindest eine Stufe als Sicherungselement ausgestaltet.

In einer beispielhaften Ausführungsform ist zumindest ein Bereich eines Fixierungselementes als Sicherungselement ausgestaltet.

In einer beispielhaften Weiterbildung ist eine Basis des Fixierungselementes als Sicherungselement ausgestaltet. Dabei kann diese Basis beispielsweise im Wesentlichen U-förmig ausgebildet sein. Wiederum können dabei einzelne Flächen der Schenkel der U-förmigen Basis des Fixierungselementes als Führungsfläche ausgebildet sein.

In einer beispielhaften Ausführungsform sind alle oder einzelne Sicherungselemente durch den Träger ausgebildet.

In einer alternativen Ausführungsform sind alle oder einzelne Sicherungselemente durch das expandierbare Material ausgebildet.

In einer weiteren Ausführungsform ist zumindest ein Sicherungselement durch den Träger gebildet, und zumindest ein Sicherungselement ist durch das expandierbare Material gebildet.

Da der Träger in der Regel mit kleineren Toleranzen hergestellt werden kann als das expandierbare Material, kann es vorteilhaft sein, die Sicherungselemente möglichst durch den Träger auszubilden.

Als expandierbares Material können grundsätzlich verschiedene Materialien eingesetzt werden, welche zur Schäumung gebracht werden können. Das Material kann dabei Verstärkungseigenschaften aufweisen oder auch nicht. Typischerweise wird das expandierbare Material thermisch, durch Feuchtigkeit oder durch elektromagnetische Strahlung zur Expansion gebracht.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.

Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 250°C, insbesondere von 100°C bis 250°C, bevorzugt von 120°C bis 240°C, bevorzugt von 130°C bis 230°C schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschrieben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben. Solche expandierbaren Materialien sind für die vorliegende Erfindung besonders bevorzugt.

Als expandierbare Materialien mit Verstärkungseigenschaften sind beispielsweise diejenigen bevorzugt, welche unter dem Handelsnamen SikaReinforcer^{®} 941 von der Sika Corp., USA, vertrieben werden. Diese sind beschrieben in US 6,387,470.

In einer beispielhaften Ausführungsform hat das expandierbare Material eine Expansionsrate von 800% bis 5000%, bevorzugt von 1000% bis 4000%, besonders bevorzugt von 1500% bis 3000%. Expandierbare Materialien mit solchen Expansionsraten bieten den Vorteil, dass dadurch eine zuverlässige Abdichtung bzw. Abdämmung des Strukturelementes gegen Flüssigkeiten und Schall erreicht werden kann.

In einer beispielhaften Ausführungsform ist das expandierbare Material als temperaturinduziertes Material ausgebildet.

Dies hat den Vorteil, dass dadurch der Ofen zur Einbrennung der Tauchlackierungsflüssigkeit benutzt werden kann, um das expandierbare Material zu expandieren und um dadurch den Hohlraum abzudämmen. Somit ist kein zusätzlicher Arbeitsschritt notwendig.

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

Weiterhin kann der Träger beispielsweise massiv, hohl, oder geschäumt sein oder eine gitterartige Struktur aufweisen. Die Oberfläche des Trägers kann typischerweise glatt, rau oder strukturiert sein.

Bei Dämmelementen, bei welchen sich das expandierbare Material auf einem Träger befindet, unterscheidet sich das Herstellungsverfahren dementsprechend, ob der Träger aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall der Träger, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das expandierbare Material, wird mit einem zweiten Spritzaggregat an die erste Komponente angespritzt.

Besteht der Träger aus einem Material, welches sich nicht durch das Spritzgussverfahren herstellen lässt, also beispielsweise aus einem Metall, wird der Träger in ein entsprechendes Werkzeug gelegt und das expandierbare Material wird an den Träger angespritzt. Selbstverständlich besteht auch die Möglichkeit das expandierbare Material durch spezielle Befestigungsmittel oder -verfahren an dem Träger zu befestigen.

Weiterhin können Träger auch durch andere Verfahren hergestellt werden, beispielsweise durch Extrusion.

In einer beispielhaften Ausführungsform ist das Überführungselement als Roboter oder als Cobot ausgebildet.

In einer alternativen Ausführungsform ist das Überführungselement eine Bedienungsperson.

In einer beispielhaften Ausführungsform umfasst die Zwischenstation zumindest ein Grundelement, wobei das Grundelement Positionierungselemente zur Positionierung des Dämmelementes auf dem Grundelement enthält, sodass ein Dämmelement oder ein Stapel auf vordefinierte Weise auf dem Grundelement angeordnet werden kann.

In einer alternativen Ausführungsform umfasst die Zwischenstation zumindest ein Fördersystem, welches dazu ausgebildet ist, die Dämmelemente oder die Stapel nacheinander in eine vordefinierte Entnahmeposition zu fördern.

In einer beispielhaften Weiterbildung ist das Fördersystem als Paternoster-System ausgestaltet.

In einer weiteren alternativen Ausführungsform umfasst die Zwischenstation zumindest ein Gestell, welches mehrere Dämmelemente aufnehmen kann, und welches die Dämmelemente in einer vordefinierte Entnahmeposition bereithalten kann.

In einer beispielhaften Weiterbildung hat das Gestell zumindest ein Führungselement, welches einem Umriss eines Dämmelementes zumindest teilweise nachgeformt ist.

In einer beispielhaften Weiterbildung sind das zumindest eine Führungselement oder die mehreren Führungselemente so ausgebildet, dass die Dämmelemente in nur einer räumlichen Lage darin aufnehmbar sind.

In einer beispielhaften Ausführungsform umfasst die Zwischenstation für jeden unterschiedlichen Typ von Dämmelementen, welche vom System zur Verarbeitung vorgesehen sind, ein jeweils eigenes Gestell. Insbesondere hat dabei jedes Gestell derart ausgestaltete Führungselement, dass nur der vorgesehene Dämmelement-Typus darin angeordnet werden kann.

Das Vorsehen von separaten und typenspezifischen Gestellen hat den Vorteil, dass dadurch Fehlmanipulation verhindert werden können.

Das Dämmelement hat eine Stapelhöhe, welche einer zusätzlichen Höhe in Stapelrichtung eines Stapels mit Dämmelementen entspricht, um welche der Stapel wächst, wenn ein weiteres Dämmelement auf den Stapel gestapelt wird.

In einer beispielhaften Ausführungsform beträgt eine Stapelhöhe des Dämmelementes höchstens 80%, bevorzugt höchstens 70%, bevorzugt höchstens 60%, bevorzugt höchstens 50%, bevorzugt höchstens 40%, bevorzugt höchstens 30%, einer Gesamthöhe eines einzelnen Dämmelementes in Stapelrichtung.

Dies hat den Vorteil, dass dadurch die Dämmelemente platzsparender in einem Stapel angeordnet werden können. Durch eine stärkere vertikale Verschachtelung benachbarter Dämmelemente in einem Stapel wird zudem eine verbesserte Stabilität eines Gesamtstapels erreicht.

In einer beispielhaften Ausführungsform umfasst ein Stapel zumindest zehn oder zumindest fünfzehn oder zumindest zwanzig oder zumindest fünfundzwanzig oder zumindest dreissig gestapelte Dämmelemente.

In einer weiteren beispielhaften Ausführungsform umfasst ein Stapel höchstens 150 oder höchstens 120 oder höchstens 100 oder höchstens 80 oder höchstens 60 gestapelte Dämmelemente.

In einer beispielhaften Ausführungsform liegt ein unterstes Dämmelement des Stapels auf einem Grundelement auf.

Das Vorsehen eines solchen Grundelementes hat zunächst den Vorteil, dass dadurch ein Stapel von Dämmelementen auf eine Fläche gestellt werden kann, insbesondere ohne dass dabei der Stapel umkippt.

In einer beispielhaften Weiterbildung ist das Grundelement derart ausgebildet, dass der Stapel darauf so angeordnet ist, dass die Stapelrichtung im Wesentlichen vertikal verläuft.

In einer beispielhaften Weiterbildung enthält das Grundelement zumindest ein Positionierungselement zur Positionierung des untersten Dämmelementes des Stapels auf dem Grundelement.

Das Vorsehen von zumindest einem solchen Positionierungselement hat den Vorteil, dass dadurch einerseits eine Stützung beziehungsweise eine Ausrichtung des Stapels verbessert werden kann, und dass dadurch andererseits auch eine Positionierung des Stapels auf dem Grundelement vordefiniert werden kann.

Für automatisierte Prozesse ist es oftmals wichtig, dass räumliche Positionen von Elementen, welche durch Roboter manipuliert werden, genau definiert sind. Durch eine geeignete Auswahl von solchen Positionierungselementen auf den Grundelementen kann eine solche vordefinierte Positionierung der Stapel erreicht werden.

In einer beispielhaften Weiterbildung umfasst das Grundelement mehrere Positionierungselemente.

In einer beispielhaften Weiterbildung ist ein erstes Positionierungselement zur Aufnahme eines Stapels eines ersten Dämmelementtypus ausgebildet, und zumindest ein weiteres Positionierungselement auf demselben Grundelement ist zur Aufnahme eines Stapels desselben Dämmelementtypus ausgebildet.

In einer alternativen Weiterbildung umfasst das Grundelement wiederum mehrere Positionierungselemente, wobei ein erstes Positionierungselement zur Aufnahme eines Stapels eines ersten Dämmelementtypus ausgebildet ist, und wobei zumindest ein weiteres Positionierungselement auf demselben Grundelement zur Aufnahme eines Stapels eines anderen Dämmelementtypus ausgebildet ist.

Dadurch lassen sich demnach mehrere Stapel entweder desselben Typus von Dämmelementen oder unterschiedlicher Typen von Dämmelementen auf demselben Grundelement vordefiniert anordnen.

In einer beispielhaften Ausführungsform ist das Grundelement reliefartig ausgebildet, wobei jeweils für einen Stapel eine entsprechend geformte Vertiefung auf einer Oberfläche des Grundelementes ausgebildet ist.

Solche Grundelemente können jedoch auch anders ausgebildet sein, beispielsweise kann eine flächige Grundplatte vorgesehen werden, auf welcher verschiedene Stützelemente wie Säulen oder Ähnliches vorgesehen sind, welche die Stapel an vordefinierter Stelle positionieren, ausrichten und stützen.

In einer beispielhaften Ausführungsform ist das Grundelement aus Karton ausgebildet.

In einer alternativen beispielhaften Ausführungsform ist das Grundelement in Form eines Kunststoffblisters ausgebildet.

In einer alternativen Ausführungsform ist das Grundelement aus Kunststoff ausgebildet, insbesondere als Spritzgussteil oder als gedrucktes Element.

Zudem sind verschiedene weitere Ausführungsmöglichkeiten für das Grundelement denkbar.

In einer beispielhaften Ausführungsform sind die bereitgestellten Dämmelemente in einem Behälter angeordnet. In einer beispielhaften Weiterbildung sind die Dämmelemente dabei in gestapelter Form im Behälter angeordnet.

Das Verwenden eines solchen Behälters hat den Vorteil, dass beispielsweise die Dämmelemente gerade in einem Behälter bereitgestellt werden können, welcher auch für einen Transport der Dämmelemente verwendet wurde. Dadurch kann ein Umschichten oder ein Neuanordnen der Dämmelemente vermieden werden.

In einer beispielhaften Ausführungsform ist der Behälter als Box, oder als Kiste, oder als Palette ausgebildet.

In einer beispielhaften Ausführungsform ist zumindest ein Grundelement in dem Behälter angeordnet.

In einer alternativen Ausführungsform ist nur ein Grundelement in dem Behälter angeordnet.

Das Verwenden zumindest eines Grundelementes zusammen mit einem Behälter bietet den Vorteil, dass dadurch die Stapel bereits für einen Transport ausgerichtet und positioniert werden können, was oftmals platzsparend und materialschonend ist für die Dämmelemente.

In einer beispielhaften Ausführungsform bedeckt das Grundelement im Wesentlichen einen Boden des Behälters.

In einer weiteren alternativen Ausführungsform sind mehrere Grundelemente in dem Behälter angeordnet.

In einer beispielhaften Weiterbildung bedecken die mehreren Grundelemente im Wesentlichen den Boden des Behälters.

In einer alternativen Weiterbildung sind die mehreren Grundelemente zumindest teilweise übereinander angeordnet.

In einer beispielhaften Weiterbildung bilden die mehreren Grundelemente Zwischenböden, sodass die Dämmelemente bzw. die Stapel in mehreren durch die Grundelemente voneinander getrennten Lagen im Behälter angeordnet sind.

In einer beispielhaften Ausführungsform sind Stapel derart im Behälter angeordnet, dass eine Stapelrichtung vertikal verläuft, wenn der Behälter in seiner vorgesehenen Position ist.

In einer alternativen Ausführungsform sind Stapel derart ausgerichtet, dass eine Stapelrichtung im Wesentlichen horizontal verläuft, wenn der Behälter in seiner vorgesehenen Position liegt.

In einer beispielhaften Ausführungsform sind mehrere Stapel in einem Behälter angeordnet. In einer beispielhaften Weiterbildung sind die Stapelrichtungen der mehreren Stapel in dem Behälter im Wesentlichen parallel zueinander ausgerichtet.

In einer beispielhaften Ausführungsform sind mehrere Stapel desselben Dämmelementtypus in einem Behälter angeordnet.

In einer beispielhaften Ausführungsform sind mehrere Stapel desselben Dämmelementtypus auf einem Grundelement angeordnet.

In einer alternativen Ausführungsform sind mehrere Stapel von unterschiedlichen Dämmelementtypen in einem Behälter angeordnet.

In einer alternativen Ausführungsform sind mehrere Stapel von unterschiedlichen Dämmelementtypen auf einem Grundelement angeordnet.

In einer beispielhaften Ausführungsform umfasst der Behälter weiterhin eine Antirutsch-Zwischenlage.

Eine solche Antirutsch-Zwischenlage kann beispielsweise dazu verwendet werden, um mehrere Schichten von Stapeln in einem Behälter voneinander zu trennen, ohne dass dabei die Gefahr besteht, dass die Schichten relativ zueinander verrutschen.

In einer beispielhaften Ausführungsform umfasst der Roboter einen mehrgelenkigen Roboterarm und einen daran angeordneten Greifer.

In einer beispielhaften Weiterbildung umfasst der Roboter mehrere Greifer. Dabei ist der Roboter derart ausgebildet, dass er jeweils mit jedem Greifer ein einzelnes Dämmelement von der Zwischenstation entnehmen und an Strukturelementen anordnen kann.

Dabei kann der Greifer auf verschiedene Arten ausgeformt sein.

Beispielsweise kann der Greifer einen Sauggreifer und/oder einen Parallelgreifer und/oder einen Expansionsgreifer umfassen.

In einer beispielhaften Ausführungsform ist der Greifer dazu ausgebildet, mehrere unterschiedliche Typen von Dämmelementen zu greifen.

In einer beispielhaften Ausführungsform hat der Greifer zumindest zwei Eingriffselemente, welche derart ausgestaltet sind, dass sie in entsprechende Eingriffselemente an den Dämmelementen gefügt werden können.

Diese Eingriffselemente an den Dämmelementen und am Greifer des Roboters können auf unterschiedliche Art und Weise ausgestaltet werden.

Beispielsweise können die Eingriffselemente am Dämmelement in Form von Hauben oder Vertiefungen vorliegen, und die entsprechenden Eingriffselemente am Greifer können komplementär dazu ausgebildet sein.

Oder aber die Eingriffselemente am Greifer können als Löcher oder Langlöcher mit beispielsweise unterschiedlicher Grösse ausgebildet sein, und die Eingriffselemente am Dämmelement können beispielsweise eine kegelförmige Ausbildung aufweisen.

Die Eingriffselemente an den Dämmelementen können weiterhin beispielsweise als Stufen, Ränder oder Rippen ausgebildet sein.

In einer beispielhaften Weiterbildung sind diese zumindest zwei Eingriffselemente des Greifers unterschiedlich ausgeformt.

Eine unterschiedliche Ausformung der Eingriffselemente hat den Vorteil, dass dadurch eine Ausrichtung der Dämmelemente am Greifer eindeutig festgelegt werden kann, so dass die Dämmelemente nicht um 180° verkehrt gegriffen werden können. Dadurch können Fehlmanipulationen durch den Roboter vermieden werden.

In einer beispielhaften Ausführungsform liegt das Strukturelement als einzelnes Blech, oder als mehrere miteinander verbundene Bleche, insbesondere Säulen oder Träger oder Verstrebungen, oder als Bestandteil einer Karosserie, oder als Karosserie vor.

In einer beispielhaften Ausführungsform hat das Strukturelement zumindest eine Öffnung, und hat das Dämmelement zumindest ein Fixierungselement, wobei diese beiden Elemente derart ausgebildet sind, dass das Fixierungselement in die Öffnung eingerastet werden kann.

Bei gestapelten Dämmelementen erhöht in einer beispielhaften Ausführungsform jeweils ein zusätzliches Dämmelement den Stapel um höchstens 20 mm, besonders bevorzugt um höchstens 18 mm, besonders bevorzugt um höchstens 16 mm, besonders bevorzugt um höchstens 14 mm, besonders bevorzugt um höchstens 12 mm, besonders bevorzugt um höchstens 10 mm.

Das enge Stapeln von Dämmelementen hat den Vorteil, dass dadurch die Dämmelemente effizienter verpackt und transportiert werden können.

Die eingangs genannte Aufgabe wird zudem gelöst durch ein Verfahren zur Anbringung von Dämmelementen an Strukturelementen von Kraftfahrzeugen, das Verfahren umfassend die Schritte: Bereitstellen mehrere Dämmelemente; Überführen der Dämmelemente in eine Zwischenstation; Zurverfügungstellen der Dämmelemente in einer vordefinierten räumlichen Lage und Position in der Zwischenstation zur Entnahme durch den Roboter; Entnehmen einzelner Dämmelemente von der Zwischenstation durch einen Roboter; und Anbringen der Dämmelemente durch den Roboter an einem Strukturelement.

In einer beispielhaften Ausführungsform wird das Verfahren mit einem oben beschriebenen System durchgeführt.

In einer beispielhaften Ausführungsform liegen die bereitgestellten Dämmelemente in Stapeln mit mehreren aufeinander gestapelten Dämmelementen vor, wobei beim Überführen diese Stapel transportiert werden.

In einer vorteilhaften Ausführungsform hat der Roboter mehrere Greifer, sodass mehrere Dämmelemente einzeln von der Zwischenstation entnommen werden können.

In einer alternativen Ausführungsform hat der Roboter nur einen Greifer, und es wird jeweils nur ein Dämmelement einzeln von der Zwischenstation entnommen.

In einer beispielhaften Ausführungsform umfasst das Verfahren den weiteren Schritt: Transportieren der Dämmelemente in einem Behälter und/oder auf einem Grundelement; wobei die Dämmelemente in demselben Behälter und/oder auf demselben Grundelement zur Entnahme durch den Roboter bereitgestellt werden.

Das Verwenden eines Behälters und/oder Grundelementes für sowohl Transport als auch für die Bereitstellung der Dämmelemente zur Entnahme durch den Roboter bietet den Vorteil, dass dadurch die gesamte Logistik stark vereinfacht und effizienter gemacht werden kann.

In einer beispielhaften Ausführungsform werden die Dämmelemente beim Anbringen vom Roboter in einer Greifrichtung gefasst und in einer Applikationsrichtung am Strukturelement angebracht, wobei die Greifrichtung und die Applikationsrichtung im Wesentlichen einen Winkel von 90° oder von 180° bilden.

In einer alternativen Ausführungsform bilden die Greifrichtung und die Applikationsrichtung einen Winkel in dem Bereich von 90° bis 180°.

Das Verwenden einer solchen Ausrichtung beim Anbringen der Dämmelemente am Strukturelement hat den Vorteil, dass dadurch eine Greifkraft in Greifrichtung kleiner gewählt werden kann, weil Kräfte beim Anbringen des Dämmelementes am Strukturelement nicht gegen die Greifkraft wirken.

In einer beispielhaften Ausführungsform ist eine Kraft, welche vom Roboter in Greifrichtung angewendet wird, um das Dämmelement zu greifen, kleiner als eine Kraft, welche vom Roboter in Applikationsrichtung angewendet wird, um das Dämmelement am Strukturelement anzubringen.

In einer beispielhaften Weiterbildung ist die Kraft in Applikationsrichtung dabei zumindest doppelt oder zumindest dreimal oder zumindest viermal so gross wie die Kraft in Greifrichtung.

In einer beispielhaften Ausführungsform sind der Greifer und das Dämmelement in Applikationsrichtung mechanisch verzahnt.

Dies hat den Vorteil, dass dadurch eine Greifkraft kleiner gewählt werden kann, weil das Dämmelement gegen eine Verschiebung in Applikationsrichtung gesichert ist.

In einer beispielhaften Ausführungsform wird beim Anbringen ein Fixierungselement des Dämmelementes in eine Öffnung des Strukturelementes eingerastet.

In einer beispielhaften Ausführungsform werden bei einem Greifen eines Dämmelementes durch den Roboter zumindest zwei Eingriffselemente des Dämmelementes in zumindest zwei entsprechende Eingriffselemente eines Greifers gefügt, wobei die zumindest zwei Eingriffselemente des Dämmelementes unterschiedlich ausgebildet sind.

Das Vorsehen von unterschiedlichen Eingriffselementen hat den Vorteil, dass dadurch Fehlmanipulationen, insbesondere Verdrehungen um 180°, verhindert werden können.

Diese Eingriffselemente an den Dämmelementen und am Greifer des Roboters können auf unterschiedliche Art und Weise ausgestaltet werden.

Beispielsweise können die Eingriffselemente am Dämmelement in Form von Hauben oder Vertiefungen vorliegen, und die entsprechenden Eingriffselemente am Greifer können komplementär dazu ausgebildet sein.

Oder aber die Eingriffselemente am Greifer können als Löcher oder Langlöcher mit beispielsweise unterschiedlicher Grösse ausgebildet sein, und die Eingriffselemente am Dämmelement können beispielsweise eine kegelförmige Ausbildung aufweisen.

Die Eingriffselemente an den Dämmelementen können weiterhin beispielsweise als Stufen, Ränder oder Rippen ausgebildet sein.

In einer beispielhaften Ausführungsform ist ein oben beschriebenes System derart ausgebildet, dass ein oben beschriebenes Verfahren damit ausgeführt werden kann.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie;
- Fig. 2a bis 2c: eine schematische Darstellung eines beispielhaften Dämmelementes beziehungsweise eines Stapels mit mehreren solchen Dämmelementen;
- Fig. 3a bis 6: eine schematische Darstellung eines Behälters mit darin angeordneten Dämmelementen;
- Fig. 7: eine schematische Darstellung eines beispielhaften Grundelementes;
- Fig. 8a bis 8c: eine schematische Darstellung eines beispielhaften Systems;
- Fig. 9a bis 10d: eine schematische Darstellung eines beispielhaften Roboters und eines dazugehörigen Greifers;
- Fig. 11 bis 13: eine schematische Darstellung einer beispielhaften Kopplung zwischen Greifer des Roboters und dem Dämmelement;
- Fig. 14 bis 19: eine schematische Darstellung einer beispielhaften Zwischenstation.

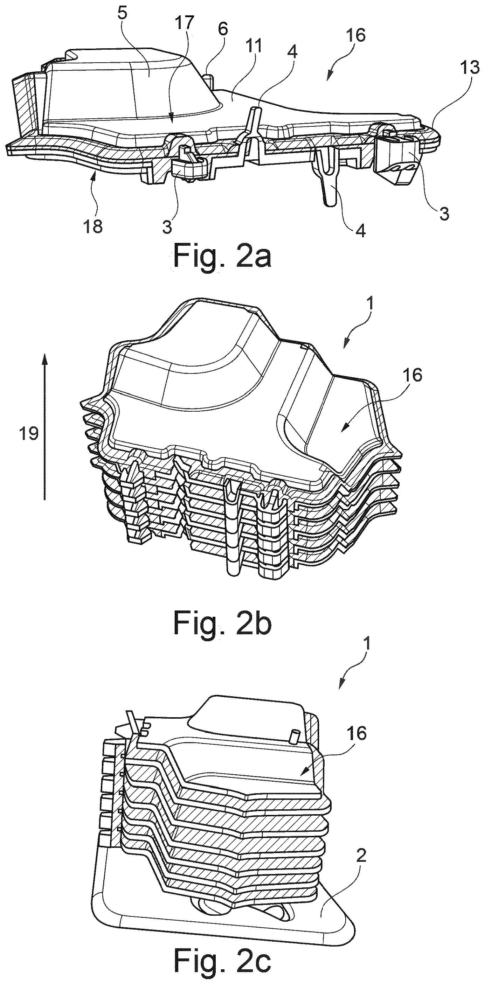

In Fig. 2a ist zunächst ein einzelnes Dämmelement 16 dargestellt. Dieses Dämmelement 16 hat einen Träger 11 und ein auf diesem Träger 11 angeordnetes expandierbares Material 13. Das Dämmelement 16 ist im Wesentlichen flächenförmig ausgebildet, um in einem Verwendungszustand einen Querschnitt eines Strukturelementes effizient abdämmen zu können. Dabei ist das Dämmelement 16 jedoch nicht vollständig flach ausgebildet, sondern es hat verschiedene Erhebungen und stufenförmige Absätze, insbesondere eine steile Stufe 5.

Das Dämmelement 16 hat dabei eine Oberseite 17 und eine Unterseite 18. Zudem hat das Dämmelement 16 in diesem Ausführungsbeispiel zwei Fixierungselemente 3, welche jeweils als Clip ausgebildet sind, sowie zwei Distanzelemente 4, welche jeweils auf unterschiedliche Seiten ausgerichtet sind.

Zudem hat das Dämmelement 16 ein Auflageelement 6, welches in diesem Ausführungsbeispiel auf der Oberseite 17 des Dämmelementes 16 angeordnet ist.

In diesem Ausführungsbeispiel hat das Dämmelement 16 drei Kontaktstellen, welche auf der Oberseite 17 angeordnet sind, und jeweils drei dazu zugeordnete Kontaktstellen auf der Unterseite 18. Dabei sind jeweils zwei Kontaktstellen in den Bereichen der Fixierungselemente 3 angeordnet, und eine weitere Kontaktstelle ist als Auflageelement 6 bzw. als Auflagepunkt auf der Unterseite 18 des Dämmelementes 16 ausgebildet.

In Fig. 2b ist nun ein Stapel 1 mit mehreren Dämmelementen 16 gemäss Fig. 2a dargestellt. Die Dämmelemente 16 sind dabei in einer Stapelrichtung 19 aufeinandergestapelt. Dabei sind die gestapelten Dämmelemente 16 parallel zueinander angeordnet und liegen jeweils auf den Kontaktstellen auf deren Oberseite und Unterseite aufeinander auf.

In Fig. 2c ist wiederum ein Stapel 1 mit gestapelten Dämmelementen 16 dargestellt, wobei in diesem Ausführungsbeispiel das unterste Dämmelement 16 des Stapels 1 auf einem Grundelement 2 angeordnet ist.

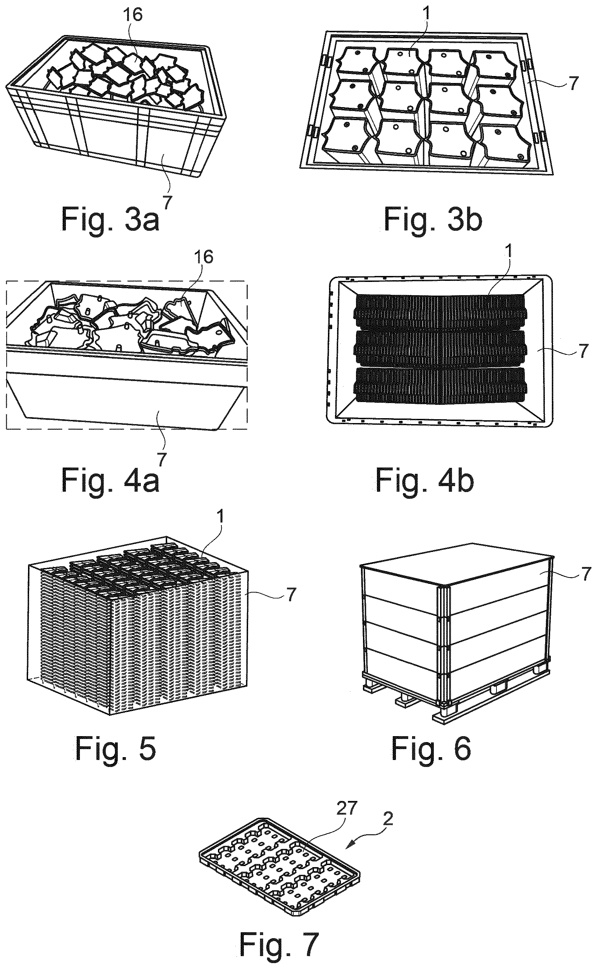

In den Fig. 3a bis 6 sind verschiedene beispielhafte Behälter 7 mit darin angeordneten Dämmelementen 16 beziehungsweise Stapeln 1 dargestellt.

In Fig. 3a ist ein Behälter 7 mit lose darin angeordneten Dämmelementen 16 dargestellt, wobei in Fig. 3b derselbe Behälter 7 mit gestapelten Dämmelementen 16 dargestellt ist, wobei die einzelnen Stapel 1 derart im Behälter angeordnet sind, dass eine Stapelrichtung im Wesentlichen vertikal ausgerichtet ist, wenn der Behälter 7 in seiner vorgesehenen Position liegt.

In den Fig. 4a und 4b ist wiederum ein Behälter 7 schematisch dargestellt, wobei in Fig. 4a die Dämmelemente 16 ungeordnet und lose vorliegen, und in Fig. 4b die Dämmelemente gestapelt in mehreren Stapeln 1 angeordnet sind. In diesem Ausführungsbeispiel ist eine Stapelrichtung derart gewählt, dass diese im Wesentlichen horizontal verläuft, wenn der Behälter 7 in seiner vorgesehenen Position liegt.

In Fig. 5 ist schematisch ein weiterer Behälter dargestellt, welcher mehrere Stapel 1 mit Dämmelementen umfasst. Ein solcher Behälter 7 ist beispielsweise dazu geeignet, die Stapel 1 der Dämmelemente sowohl zu transportieren als auch bereitzustellen für die Entnahme der einzelnen Dämmelemente durch einen Roboter.

In Fig. 6 ist ein weiterer beispielhafter Behälter 7 schematisch dargestellt. In diesem Ausführungsbeispiel ist der Behälter 7 als Palette ausgebildet. Solche Paletten eignen sich insbesondere gut für einen Transport des Behälters 7.

In Fig. 7 ist ein beispielhaftes Grundelement 2 schematisch dargestellt. In diesem Ausführungsbeispiel hat das Grundelement 2 mehrere Positionierungselemente 27. Dabei sind in diesem Ausführungsbeispiel die Positionierungselemente 27 als Vertiefungen in einem reliefartigen Grundelement 2 ausgebildet, wobei jeweils eine Vertiefung zur Aufnahme eines Stapels 1 von Dämmelementen vorgesehen ist. Durch die Verwendung solcher Grundelemente 2 kann eine Position der Stapel 1 vordefiniert werden, so dass der Roboter über weniger oder keine gesonderte Sensorik verfügen muss, um die einzelnen Dämmelemente abzugreifen.

Solche Grundelemente 2 können insbesondere auf den Böden von Behältern 7 angeordnet werden.

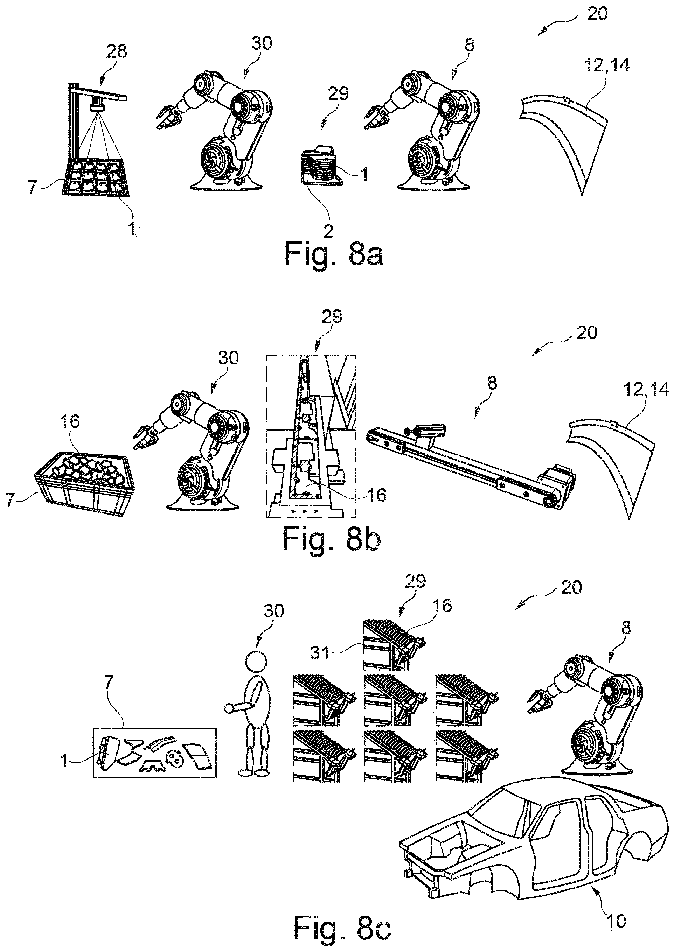

In den Fig. 8a bis 8c sind jeweils verschiedene Ausführungsbeispiele von Systemen 20 zur Anbringung von Dämmelementen 16 an Strukturelementen 12, 14 schematisch dargestellt.

In Fig. 8a werden die Stapel 1 mit Dämmelementen in einem Behälter 7 bereitgestellt. Das Überführungselement 30 ist in diesem Ausführungsbeispiel als Roboter ausgebildet. Es überführt die Dämmelemente in Stapeln 1 von dem Behälter 7 in die Zwischenstation 29. Das Überführungselement 30 verfügt neben einem Roboterarm und einem Greifer zudem über eine Positionserkennungsvorrichtung 28, welche Informationen über die Position der einzelnen Dämmelemente beziehungsweise der Stapel 7 verarbeiten kann. Von der Zwischenstation 29 werden die Dämmelemente 16 sodann von einem Roboter 8 entnommen und am Strukturelement 12, 14 angeordnet. Als Roboter 8 kommt in diesem Ausführungsbeispiel ein Mehrachsroboter mit einem Greifkopf zur Anwendung.

Im Ausführungsbeispiel gemäss Fig. 8b sind wiederum mehrere Dämmelemente 16 bereitgestellt, diesmal jedoch lose in einen Behälter 7. Wiederum ist das Überführungselement 30 als Roboter ausgebildet. Die Dämmelemente 16 werden vom Überführungselement 30 in der Zwischenstation 29 angeordnet. In diesem Beispiel ist die Zwischenstation 29 als Fördersystem ausgebildet, welches die Dämmelemente 16 jeweils in eine nacheinander in eine vordefinierte Entnahmeposition fördert. Als Roboter 8 kommt in diesem Ausführungsbeispiel ein Transportband mit einer am Band angeordneten Greifeinrichtung zur Anwendung. Dieser Roboter 8 entnimmt die Dämmelemente 16 von dieser Entnahmeposition der Zwischenstation 29 und bringt die einzelnen Dämmelemente dann an einem Strukturelement 12, 14 an, welches in diesem Ausführungsbeispiel als einzelnes Blech ausgebildet ist.

In Fig. 8c ist ein weiteres beispielhaftes System 20 schematisch dargestellt. In diesem Ausführungsbeispiel ist wiederum ein Behälter 7 zur Bereitstellung der Dämmelemente 16, welche hier als Stapel 1 vorliegen, vorgesehen. Im Unterschied zum Ausführungsbeispiel gemäss Fig. 8a sind in diesem Ausführungsbeispiel Stapel 1 mit verschiedenen Typen von Dämmelementen in einem Behälter 7 angeordnet. Dadurch kann mit einem solchen System aus einem einzelnen Behälter 7 eine Vielzahl von verschiedenen Dämmelementen an der Karosserie 10 angeordnet werden.

Das Überführungselement 30 ist in diesem Beispiel eine Bedienungsperson. Diese Bedienungsperson ordnet die Stapel 1 der Dämmelemente 16 in der Zwischenstation 29 an, in diesem Beispiel in mehreren Gestellen 31. Dabei kann beispielsweise für jeden Dämmelementtyp ein separates Gestell 31 vorgesehen werden. Der Roboter 8 entnimmt die Dämmelemente 16 von diesen Gestellen 31 der Zwischenstation 29 und bringt die einzelnen Dämmelemente dann an einem Strukturelement 12, 14 an, welches in diesem Ausführungsbeispiel als Karosserie vorliegt. Die Strukturelemente der Karosserie, an welchen die Dämmelemente 16 angeordnet werden, sind dabei zugänglich, d.h. dass beispielsweise Säulen und Träger der Karosserie noch nicht geschlossen sind.

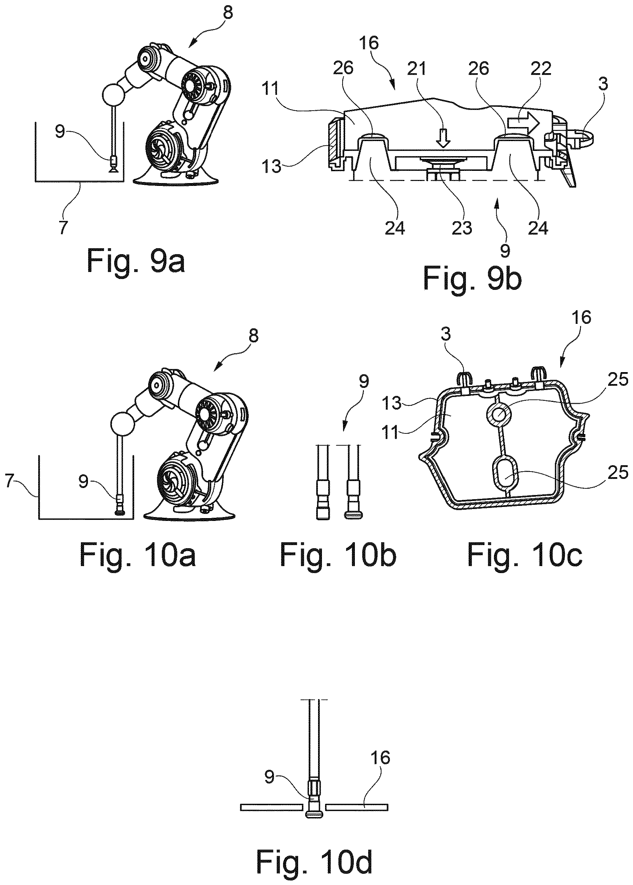

In den Fig. 9a und 9b ist schematisch ein Roboter 8 mit einem beispielhaften Greifer 9 dargestellt. In diesem Ausführungsbeispiel umfasst der Greifer 9 einen Sauggreifer 23, welcher ein Dämmelement 16 in einer Greifrichtung ansaugen kann. Zur besseren Fixierung des Dämmelementes 16 am Greifer 9 sind zudem verschiedene Eingriffselemente 24, 26 vorgesehen, welche ineinandergreifen und das Dämmelement 16 und den Greifer 9 gegen eine seitliche Verschiebung mechanisch arretieren. In diesem Ausführungsbeispiel ist ein Fixierungselement 3 des Dämmelementes derart ausgerichtet, dass eine Applikationsrichtung 22 im Wesentlichen einen 90°-Winkel zur Greifrichtung 21 bildet.

In Fig. 10A ist ein weiteres Ausführungsbeispiel eines Roboters 8 mit einem Greifer 9 schematisch dargestellt. In diesem Ausführungsbeispiel ist der Greifer 9 als Expansionsgreifer dargestellt. Dabei ist der Greifer 9 so ausgebildet, dass er in einem nicht expandierten Zustand durch Durchflussöffnungen 25 im Dämmelement hindurchgeführt werden kann, wobei das Dämmelement durch eine Expansion des Expansionsgreifers am Greifer 9 fixiert werden kann, wie dies im Querschnitt gemäss Fig. 10d dargestellt ist.

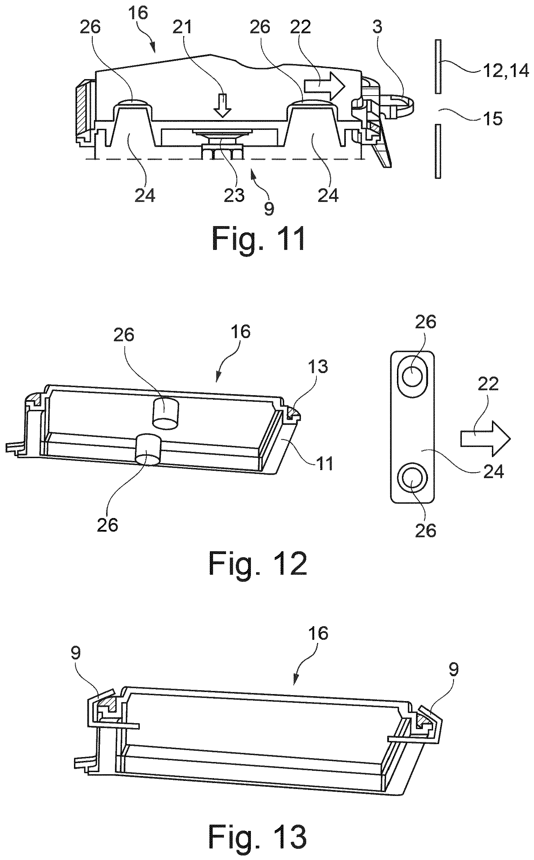

In Fig. 11 ist nun beispielhaft und schematisch die Anbringung eines Dämmelementes 16 durch den Roboter an einem Strukturelement 12, 14 dargestellt. Dabei drückt der Roboter das Dämmelement 16 in der Applikationsrichtung 22 derart gegen das Strukturelement 12, 14, dass das Fixierungselement 3 in die Öffnung 15 des Strukturelementes 12, 14 eingeführt wird und darin mechanisch arretiert. Auch in diesem Ausführungsbeispiel bilden die Greifrichtung 21 und die Applikationsrichtung 22 im Wesentlichen einen Winkel von 90° bei der Anbringung des Dämmelementes 16 am Strukturelement 12, 14.

In Fig. 12 sind schematisch und beispielhaft Eingriffselemente 26, 24 dargestellt. In diesem Ausführungsbeispiel hat das Dämmelement 16 zwei zylinderförmige Eingriffselemente 26, und der Greifer des Roboters hat ein Eingriffselement 24 in Form einer Platte mit einer runden und einer ovalen und einer länglichen Öffnung zur Aufnahme der zylinderförmigen Eingriffselemente 26 des Dämmelementes 16.

In Fig. 13 ist schematisch und beispielhaft eine weitere Variante eines Greifers 9 des Roboters dargestellt. In diesem Ausführungsbeispiel umfasst der Greifer 9 zumindest zwei klammerartige bewegbare Greifelemente, welche das Dämmelement 16 an dessen Kante greifen können.

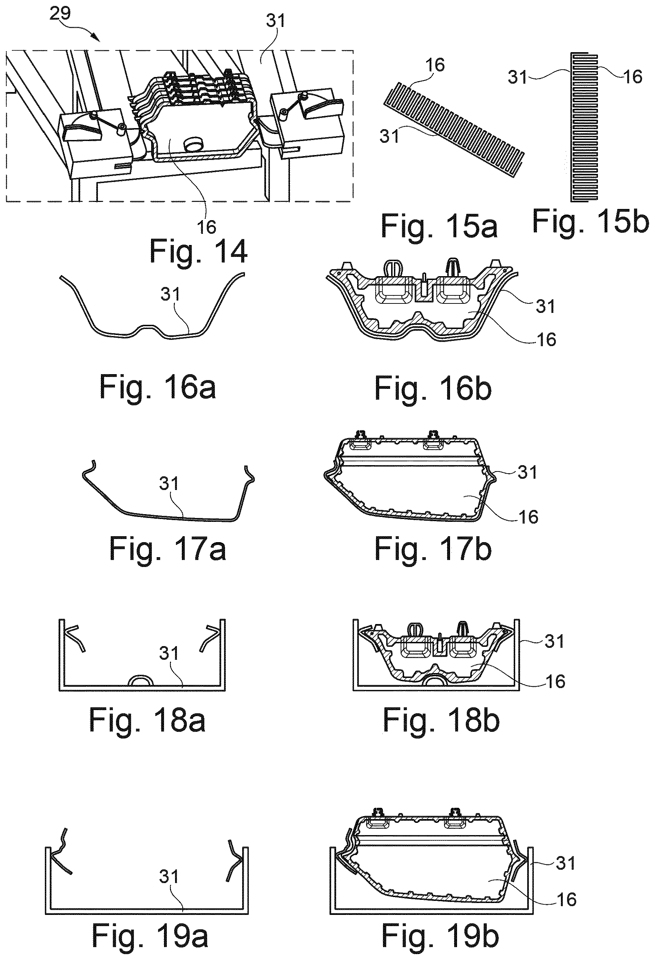

In Fig. 14 ist schematisch ein beispielhaftes Gestell 31 dargestellt. Dabei werden die Dämmelemente 16 in gestapelter Form in diesem Gestell 31 angeordnet, und immer ein vorderstes Dämmelement 16 wird in einer vordefinierten Entnahmeposition bereitgehalten.

In den Fig. 15a und 15b ist jeweils eine Zwischenstation abgebildet, in welcher die Dämmelemente 16 in einem Gestell 31 angeordnet sind. Im Ausführungsbeispiel der Fig. 15a ist das Gestell 31 geneigt, und im Ausführungsbeispiel der Fig. 15b ist das Gestell 31 vertikal ausgerichtet. Beispielsweise kann eine Position gemäss Fig. 15a als Befüllungsposition des Gestelles 31 verwendet werden, und eine Position gemäss Fig. 15b kann als Verwendungsposition des Gestelles 31 verwendet werden.

In den Fig. 16a bis 19b sind verschiedene beispielhafte Gestelle 31, jeweils mit und ohne darin angeordneten Dämmelementen 16, im Querschnitt dargestellt. Dabei sind die Gestelle 31 mit Führungselementen ausgestattet, welche dem Umriss der Dämmelemente 16 nachgeformt sind. In den Fig. 16 und 17 folgen die Führungselemente ungefähr einer unteren Hälfte des Querschnittes der Dämmelemente 16, und in den Fig. 18 und 19 folgen die Führungselemente lediglich einzelnen kurzen Abschnitten des Querschnittes der Dämmelemente 16.

### Bezugszeichenliste

- 1: Stapel
- 2: Grundelement
- 3: Fixierungselement
- 4: Distanzelement
- 5: Stufe
- 6: Auflageelement
- 7: Behälter
- 8: Roboter
- 9: Greifer
- 10: Karosserie
- 11: Träger
- 12: Strukturelement
- 13: expandierbares Material
- 14: Strukturelement
- 15: Öffnung
- 16: Dämmelement
- 17: Oberseite
- 18: Unterseite
- 19: Stapelrichtung
- 20: System
- 21: Greifrichtung
- 22: Applikationsrichtung
- 23: Sauggreifer
- 24: Eingriffselement
- 25: Durchflussöffnung
- 26: Eingriffselement
- 27: Positionierungselement
- 28: Positionserkennungsvorrichtung
- 29: Zwischenstatioin
- 30: Überführungselement
- 31: Gestell

## Patentansprüche

1. System zur Anbringung von Dämmelementen (16) an Strukturelementen (12, 14) von Kraftfahrzeugen, das System umfassend:
mehrere bereitgestellte Dämmelemente (16), ein Überführungselement (30), eine Zwischenstation (29), einen Roboter (8), und zumindest ein Strukturelement (12, 14);
wobei das Überführungselement (30) dazu ausgebildet ist, die bereitgestellten Dämmelemente (16) in der Zwischenstation (29) anzuordnen;
wobei die Dämmelemente (16) in der Zwischenstation (29) zur Entnahme durch den Roboter (8) in einer vordefinierten räumlichen Lage und Position angeordnet sind; und
wobei der Roboter (8) dazu ausgebildet ist, jeweils einzelne Dämmelemente (16) von der Zwischenstation (29) zu entnehmen und an Strukturelementen (12, 14) anzuordnen.

2. System nach Anspruch 1, wobei die Dämmelement (16) jeweils umfassen:
einen Träger (11); und
ein expandierbares Material (13), welches auf dem Träger (11) angeordnet ist;
wobei das Dämmelement (16) eine Oberseite (17) und eine Unterseite (18) hat, welche in einem Verwendungszustand im Wesentlichen in einer Ebene eines abzudämmenden Querschnittes des Strukturelementes (12, 14) ausgerichtet sind.

3. System nach einem der vorhergehenden Ansprüche, wobei die mehreren bereitgestellten Dämmelemente (16) aufeinander gestapelt in einem Behälter (7) angeordnet sind.

4. System nach einem der vorhergehenden Ansprüche, wobei das Überführungselement (30) als Roboter oder als Cobot ausgebildet ist.

5. System nach einem der vorhergehenden Ansprüche, wobei die Zwischenstation (29) zumindest ein Grundelement (2) umfasst, wobei das Grundelement (2) Positionierungselemente zur Positionierung des Dämmelementes (16) auf dem Grundelement (2) enthält, sodass ein Dämmelement (16) oder ein Stapel (1) auf vordefinierte Weise auf dem Grundelement (2) angeordnet werden kann.

6. System nach einem der Ansprüche 1 bis 4, wobei die Zwischenstation (29) zumindest ein Fördersystem umfasst, welches dazu ausgebildet ist, die Dämmelemente (16) oder die Stapel (1) nacheinander in eine vordefinierte Entnahmeposition zu fördern.

7. System nach einem der Ansprüche 1 bis 4, wobei die Zwischenstation (29) zumindest ein Gestell (31) umfasst, welches mehrere Dämmelemente (16) aufnehmen kann, und welches die Dämmelemente (16) in einer vordefinierte Entnahmeposition bereithalten kann.

8. System nach Anspruch 7, wobei das Gestell (31) zumindest ein Führungselement hat, welches einem Umriss eines Dämmelementes (16) zumindest teilweise nachgeformt ist.

9. System nach Anspruch 8, wobei das zumindest eine Führungselement oder die mehreren Führungselemente so ausgebildet sind, dass die Dämmelemente (16) in nur einer räumlichen Lage darin aufnehmbar sind.

10. System nach einem der vorhergehenden Ansprüche, wobei der Roboter (8) einen mehrgelenkigen Roboterarm und einen daran angeordneten Greifer (9) umfasst.

11. System nach einem der vorhergehenden Ansprüche, wobei das Strukturelement (12, 14) als einzelnes Blech, oder als mehrere miteinander verbundene Bleche, insbesondere Säulen oder Träger oder Verstrebungen, oder als Bestandteile von Karosserien, oder als Karosserie vorliegt.

12. Verfahren zur Anbringung von Dämmelementen (16) an Strukturelementen (12, 14) von Kraftfahrzeugen, das Verfahren umfassend die Schritte:
Bereitstellen mehrere Dämmelemente (16);
Überführen der Dämmelemente (16) in eine Zwischenstation (29);
Zurverfügungstellen der Dämmelemente (16) in einer vordefinierten räumlichen Lage und Position in der Zwischenstation (29) zur Entnahme durch einen Roboter (8);
Entnehmen einzelner Dämmelemente (16) von der Zwischenstation (29) durch den Roboter (8); und
Anbringen der Dämmelemente (16) durch den Roboter (8) an einem Strukturelement (12, 14).

13. Verfahren nach Anspruch 12, wobei die bereitgestellten Dämmelemente (16) in Stapeln (1) mit mehreren aufeinander gestapelten Dämmelementen (16) vorliegen, und wobei beim Überführen diese Stapel (1) transportiert werden.

14. Verfahren nach Anspruch 12 oder 13, wobei die Dämmelemente (16) beim Anbringen vom Roboter (8) in einer Greifrichtung (21) gefasst werden und in einer Applikationsrichtung (22) am Strukturelement (12, 14) angebracht werden, wobei die Greifrichtung (21) und die Applikationsrichtung (22) im Wesentlichen einen Winkel von 90° oder von 180° bilden.

15. Verfahren nach einem der Ansprüche 12 bis 14, wobei bei einem Greifen eines Dämmelementes (16) durch den Roboter (8) zumindest zwei Eingriffselemente (24, 26) des Dämmelementes (16) in zumindest zwei entsprechende Eingriffselemente (24, 26) eines Greifers (9) gefügt werden, wobei die zumindest zwei Eingriffselemente (24, 26) des Dämmelementes (16) unterschiedlich ausgebildet sind.

## Claims

1. A system for mounting insulating elements (16) on structural elements (12, 14) of motor vehicles, said system comprising:
a plurality of provided insulating elements (16), a transfer element (30), an intermediate station (29), a robot (8), and at least one structural element (12, 14);
wherein the transfer element (30) is designed to arrange the provided insulating elements (16) in the intermediate station (29);
wherein the insulating elements (16) are arranged in a predefined spatial location and position in the intermediate station (29) for removal by the robot (8); and
wherein the robot (8) is designed to remove respective individual insulating elements (16) from the intermediate station (29) and to arrange them on structural elements (12, 14).

2. The system as claimed in claim 1, wherein the insulating elements (16) each comprise:
a carrier (11); and
an expandable material (13) disposed on the carrier (11);
wherein the insulating element (16) has a top side (17) and a bottom side (18) which, in a state of use, are substantially aligned in a plane of a cross section of the structural element (12, 14) that is to be sealed off,

3. The system as claimed in either of the preceding claims, wherein the multiple provided insulating elements (16) are in a stacked arrangement one on top of another in a container (7).

4. The system as claimed in any of the preceding claims, wherein the transfer element (30) takes the form of a robot or of a cobot.

5. The system as claimed in any of the preceding claims, wherein the intermediate station (29) comprises at least one base element (2), wherein the base element (2) comprises positioning elements for positioning of the insulating element (16) on the base element (2) such that it is possible to arrange an insulating element (16) or a stack (1) on the base element (2) in a predefined manner.

6. The system as claimed in any of claims 1 to 4, wherein the intermediate station (29) comprises at least one conveyor system which is designed to convey the insulating elements (16) or the stacks (1) successively into a predefined removal position.

7. The system as claimed in any of claims 1 to 4, wherein the intermediate station (29) comprises at least one frame (31) which can accommodate a plurality of insulating elements (16), and which can provide the insulating elements (16) in a predefined removal position.

8. The system as claimed in claim 7, wherein the frame (31) has at least one guide element that at least partly follows an outline of an insulating element (16).

9. The system as claimed in claim 8, wherein the at least one guide element or the plurality of guide elements are designed such that the insulating elements (16) can be taken up in only one spatial location.

10. The system as claimed in any of the preceding claims, wherein the robot (8) comprises a multijoint robot arm and a gripper (9) disposed thereon.

11. The system as claimed in any of the preceding claims, wherein the structural element (12, 14) takes the form of a single sheet, or of a plurality of sheets bonded to one another, especially columns or beams or crossbeams, or of constituents of vehicle bodies, or of a vehicle body.

12. A method of mounting insulating elements (16) on structural elements (12, 14) of motor vehicles, said method comprising the steps of:
providing multiple insulating elements (16);
transferring the insulating elements (16) to an intermediate station (29);
making the insulating elements (16) available in a predefined spatial location and position in the intermediate station (29) for removal by a robot (8);
removing individual insulating elements (16) from the intermediate station (29) by means of the robot (8); and
mounting the insulating elements (16) by means of the robot (8) on a structural element (12, 14).

13. The method as claimed in claim 12, wherein the provided insulating elements (16) are in the form of stacks (1) comprising a plurality of insulating elements (16) stacked one on top of another, and wherein the transferring involves transporting these stacks (1).

14. The method as claimed in claim 12 or 13, wherein the insulating elements (16), in the mounting operation, are grasped by the robot (8) in a gripping direction (21) and mounted on the structural element (12, 14) in an application direction (22), wherein the gripping direction (21) and the application direction (22) form essentially an angle of 90° or of 180°.

15. The method as claimed in any of claims 12 to 14, wherein, in the gripping of an insulating element (16) by the robot (8), at least two engaging elements (24, 26) of the insulating element (16) are fitted into at least two corresponding engaging elements (24, 26) of a gripper (9), wherein the at least two engaging elements (24, 26) of the insulating element (16) are of different design.

## Revendications

1. Système de fixation d'éléments d'isolation (16) à des éléments de structure (12, 14) de véhicules automobiles, le système comprenant :
plusieurs éléments d'isolation (16) mis à disposition, un élément de transfert (30), une station intermédiaire (29), un robot (8) et au moins un élément structurel (12, 14) ;
l'élément de transfert (30) étant conçu pour disposer dans la station intermédiaire (29) les éléments d'isolation (16) mis à disposition ;
les éléments d'isolation (16) étant disposés dans la station intermédiaire (29) dans une orientation spatiale et une position prédéfinies afin d'être retirés par le robot (8) : et
le robot (8) étant conçu pour retirer des éléments d'isolation individuels (16) de la station intermédiaire (29) et les disposer sur des éléments structurels (12, 14).

2. Système selon la revendication 1, les éléments d'isolation (16) comprenant chacun :
un support (11) ; et
une matière extensible (13) qui est disposée sur le support (11) ;
l'élément d'isolation (16) comportant un côté supérieur (17) et un côté inférieur (18) qui, en état d'utilisation, sont sensiblement orientés dans un plan d'une section transversale à isoler de l'élément structurel (12, 14).

3. Système selon l'une des revendications précédentes, les plusieurs éléments d'isolation (16) mis à disposition étant disposés en étant empilés les uns sur les autres dans un récipient (7).

4. Système selon l'une des revendications précédentes, l'élément de transfert (30) étant conçu sous la forme d'un robot ou d'un cobot.

5. Système selon l'une des revendications précédentes, la station intermédiaire (29) comprenant au moins un élément de base (2), l'élément de base (2) contenant des éléments de positionnement destinés à positionner l'élément d'isolation (16) sur l'élément de base (2), de sorte qu'un élément d'isolation (16) ou une pile (1) puisse être disposé(e) sur l'élément de base (2) d'une manière prédéfinie.

6. Système selon l'une des revendications 1 à 4, la station intermédiaire (29) comprenant au moins un système d'acheminement qui est conçu pour acheminer les éléments d'isolation (16) ou les piles (1) successivement jusqu'à une position de retrait prédéfinie.

7. Système selon l'une des revendications 1 à 4, la station intermédiaire (29) comprenant au moins un cadre (31) pouvant accueillir plusieurs éléments d'isolation (16) et pouvant maintenir les éléments d'isolation (16) à disposition dans une position de retrait prédéfinie.

8. Système selon la revendication 7, le cadre (31) comportant au moins un élément de guidage qui est au moins partiellement conformé comme le contour d'un élément d'isolation (16).

9. Système selon la revendication 8, l'au moins un élément de guidage ou les plusieurs éléments de guidage étant conçus de telle sorte que les éléments d'isolation (16) ne puissent être logés dans celui-ci ou ceux-ci que dans une seule orientation spatiale.

10. Système selon l'une des revendications précédentes, le robot (8) comprenant un bras de robot à articulations multiples et un organe de préhension (9) disposé sur celui-ci.

11. Système selon l'une des revendications précédentes, l'élément structurel (12, 14) étant réalisé sous la forme d'une tôle unique ou de plusieurs tôles reliées entre elles, notamment des colonnes ou des supports ou des entretoises, ou comme composants de carrosseries, ou comme carrosserie.

12. Procédé de fixation d'éléments d'isolation (16) à des éléments structurels (12, 14) de véhicules automobiles, le procédé comprenant les étapes suivantes :
mettre à disposition plusieurs éléments d'isolation (16) ;
transférer les éléments d'isolation (16) vers une station intermédiaire (29) ;
placer les éléments d'isolation (16) dans une orientation spatiale et une position prédéfinies dans la station intermédiaire (29) afin d'être retirés par un robot (8) ;
retirer des éléments d'isolation individuels (16) de la station intermédiaire (29) à l'aide du robot (8) ; et
fixer les éléments d'isolation (16) à un élément structurel (12, 14) à l'aide du robot (8).

13. Procédé selon la revendication 12, les éléments d'isolation (16) mis à disposition étant présents dans des piles (1) comprenant plusieurs éléments d'isolation (16) empilés les uns sur les autres, et ces piles (1) étant transportées pendant le transfert.

14. Procédé selon la revendication 12 ou 13,les éléments d'isolation (16) étant saisis par le robot (8) dans une direction de préhension (21) lors de la fixation et étant fixés à l'élément structurel (12, 14) dans une direction d'application (22), la direction de préhension (21) et la direction d'application (22) formant sensiblement un angle de 90° ou 180°.

15. Procédé selon l'une des revendications 12 à 14, lorsqu'un élément d'isolation (16) est saisi par le robot (8), au moins deux éléments d'engagement (24, 26) de l'élément d'isolation (16) étant insérés dans au moins deux éléments d'engagement correspondants (24, 26) d'un organe de préhension (9), les au moins deux éléments d'engagement (24, 26) de l'élément d'isolation (16) étant conçus différemment.
